# EUROPEAN PATENT SPECIFICATION

(11) **EP 1 231 409 B1**
(45) Date of publication and mention of the grant of the patent: **14.12.2005**
(21) Application number: 02003313.0
(22) Date of filing: 13.02.2002
(51) Int. Cl.: F16G 13/04

(54) **Silent chain in which strength and elongation of link row are uniformized**
Zahnkette mit Vergleichsmässigung der Festigkeit und der Dehnung der Gliederreihen
Chaine à dents à résistance mécanique et allongement des rangées de maillons uniformisés

(30) Priority: 13.02.2001 JP 2001036090
(43) Date of publication of application: 14.08.2002
(73) Proprietor: Tsubakimoto Chain Co., Osaka 530-0018, (JP)
(72) Inventor: Horie, Hiroshi, 2-4,Komatsubara-cho, Kita-ku, Osaka (JP); Saito, Toyonaga, 2-4,Komatsubara-cho, Kita-ku, Osaka (JP); Sato, Toshifumi, 2-4,Komatsubara-cho, Kita-ku, Osaka (JP)
(74) Representative: Maisch, Thomas

(56) References cited:
- FR-A- 658 722

## Description

### BACKGROUND OF THE INVENTION

### Field of the Invention

The present invention relates to a silent chain wound to a pair of sprockets that are apart from each other to transmit power from a drive sprocket to a follower sprocket.

### Prior Art

The silent chain is a chain wound to a pair of sprockets that are apart from each other to transmit power from the drive sprocket to the follower sprocket. For example, the silent chain disclosed in Japanese Patent No. 3035206 is one in which a link row that consists of a pair of guide plates and N pieces of link plates and a link row that consists of N+1 pieces of link plates are alternately arranged, which are formed endlessly by connection pins.

In the silent chain described in the foregoing gazette, the link plates in the link row including the guide plate are thin and the link plates in the link row that does not include the guide plate are partially thick, from a viewpoint of considering balance of tensile strength in each link row.

A first problem is that strength is different between the link row including the guide plate and the link row that does not include the guide plate.

The link row including the guide plate has the guide plates in addition to the link plates. The guide plate also bears a load applied to the silent chain. The link row that does not include the guide plate bears the load applied to the silent chain only by the link plates. For this reason, it is extremely difficult to uniformize the strength of each link row.

A second problem is that a pitch becomes easily different between the link row including the guide plate and the link row that does not include the guide plate.

If the silent chain does not adopt the invention described in the foregoing gazette but all link plates are the same, the strength of the link row including the guide plate increases, and elongation of the link row including the guide plate becomes smaller comparing to elongation of the link row that does not include the guide plate.

Since load balance is taken in consideration in the silent chain that adopts the invention described in the foregoing gazette, elongation of each link row becomes closer to a certain extent. However, elongation of the link row is caused by: (1) flexure of pin; (2) load and stress applied to the link plate; (3) load and stress applied to the guide plate; (4) deformation of the guide plate; (5) plastic deformation between pin and pin hole when a proof load is applied; or the like. Therefore, if a configuration of the link row is different, the pitch itself becomes easily different and change of pitch is also different when a load is applied.

If the pitch and its change are different in each link row, conditions for engagement with the sprocket are also different in each link row. When the conditions for engagement are different in each link row, a problem such as engagement failure and noise occurs. Such a problem causes adverse effect to the life of entire silent chain.

A third problem is that two or more kinds of link plates must be controlled and assembled correctly.

The length, the height and the thickness of a small link plate are approximately 12 mm, approximately 7 mm and approximately 1 mm respectively. A thickness difference of link plates which have different thickness is approximately 0.4 mm. It is extremely difficult to recognize the thickness difference only by eyesight on-site of mass production. Accordingly, although part control is performed accurately with another method to prevent mixture of a different link plate, the control is not easy. Further, since different link plates are assembled in a link, assembly is laborious and quite non-economical.

FR-A-658 722 is showing a silent chain comprising a plurality of first link rows and second link rows. The first link row is consisting essentially of two guide plates 8 and N = 8 link plates 2. The guide plates 8 are arranged side by side along a longitudinal direction of the chain with the link plates 2 being arranged between said two guide plates 8. The second link row is only comprising ten link plates 1, i.e. N+2 link plates. Said first link rows and said second link rows are connected in alternating, interleaving relationship along the longitudinal direction of the chain by connection pins.

### SUMMARY OF THE INVENTION

The object of the present invention is to provide a silent chain in which configurations of link rows are uniformized to make the strength of the link rows equal.

Another object of the present invention is to provide a silent chain in which elongation of each link is made equal regardless of elastic deformation and/or plastic deformation.

Still another object of the present invention is to provide a silent chain in which the number of parts is reduced to reduce a production cost.

The present invention has solved the foregoing problems by a silent chain according to the only claim.

In the silent chain of the present invention composed as described above, a guide plate is arranged over to an outermost link plate of an adjacent second link row at one side of the first link row, and the guide plate is not provided at the other side of the first link row. On the contrary, a guide plate is arranged over to an outermost link plate of an adjacent first link row at the other side of the second link row, and the guide plate is not provided at one side of the second link row. Therefore, only one guide plate exists at each link row and the guide plates are arranged in a stagger state in a longitudinal direction of chain.

The configuration of each link row is the same. Specifically, each link row consists of the guide plate of the same number and the same shape and size and the link plates of the same number and the same shape and size. Then, the guide plate and the link plates of each link row are composed relatively rotatable to the connection pin.

Accordingly, since the load applied to each link row is the same, the load and the stress applied to the guide plates of the first link row and the guide plates of the second link row are the same. Further, the load and the stress applied to the link plate closest to the guide plate of the first link row and the link plate closest to the guide plate of the second link row are the same. Moreover, the first and second link rows have the same load and stress applied to the link plates. The first and second link rows have the same strength by composing the link row as described above.

As in the foregoing, since the load and the stress applied to each guide plate and link plate are the same, the elongation of the guide plate and the link plate is also the same regardless of the elastic deformation and/or the plastic deformation. The same elongation in the first and second rows causes the same pitch and its change in each link row.

In other words, the strength and the elongation of each link row are uniformized in the silent chain of the present invention. Accordingly, all the link rows are engaged with the sprocket on the same conditions.

### BRIEF DESCRIPTION OF THE DRAWINGS

Fig. 1 is a principal-portion plan view of an embodiment of a silent chain according to the present invention.
Fig. 2 is a front view of Fig. 1.

### PREFERRED EMBODIMENTS OF THE INVENTION

The embodiment of the silent chain according to the present invention will be described with reference to the drawings. Typical purposes of the silent chain are an engine for automobile, a transmission for an automobile and a transfer for an automobile. In such purposes, the silent chain is endlessly wound to a pair of sprockets that are apart from each other, and transmits power from the drive sprocket to the follower sprocket.

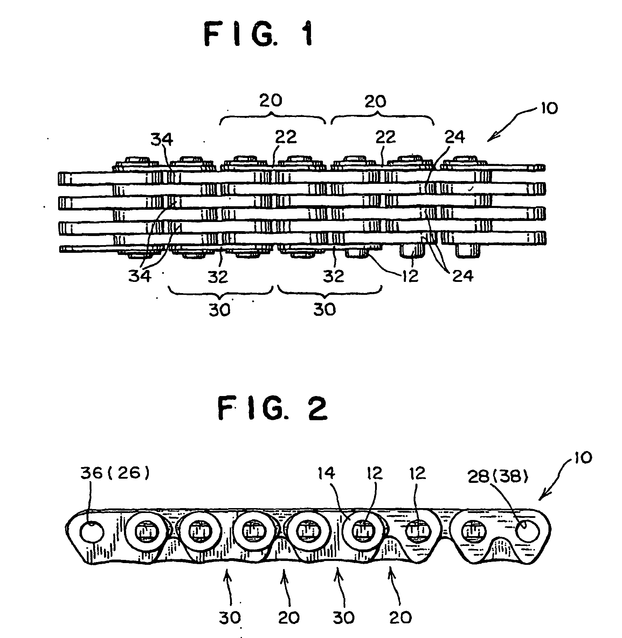

Fig. 1 is the principal-portion plan view of an embodiment of a silent chain 10 according to the present invention, and Fig. 2 is the front view of Fig. 2. The silent chain 10 basically includes: a first link row 20; a second link row 30; a connection pin 12; and a pin stopper 14.

The first link row 20 consists of a guide plate 22 and three link plates 24. Each link plate 24 has the same shape and size. The second link row 30 consists of a guide plate 32 and three link plates 34. Each link plate 34 has the same shape and size.

Furthermore, the guide plate 22 of the first link row 20 and the guide plate 32 of the second link row 30 have the same shape and size, and the link plate 24 of the first link row 20 and the link plate 34 of the second link row 30 also have the same shape and size.

In the silent chain 10 of this embodiment, the first link row 20 and the second link row 30 are arranged alternately in a stagger state. The guide plates (22, 32) are positioned on an outermost side, the first link row 20 and the second link row 30 are assembled in a comb-teeth state, the connection pin 12 of a cylindrical shape is inserted into common pin holes, and the silent chain 10 is thus formed.

With this configuration, the strength and the elongation of the link rows (20, 30) are uniformized. Each of the link rows (20, 30) has the same configuration of the guide plate and link plate. Since the load applied to each link row is the same, the same load and the stress are applied to the guide plate and the link plate. Accordingly, difference of the strength and the elongation of each link row is eliminated.

From a viewpoint of uniformizing the strength and the elongation of each link row, it is preferable to make the relation between the guide plate (22, 32) and the link plates (24, 34) of each link row (20, 30) and the connection pin 12 equal. In this embodiment, each of guide plates (22, 32) includes a pair (front and rear) of pin holes (26, 36). The inner diameter of the pin holes (26, 36) is larger than the outer diameter of the connection pin 12. Further, each of the link plates (24, 34) also includes a pair (front and rear) pin holes (28, 38). The inner diameter of the pin holes (28, 38) is larger than the outer diameter of the connection pin 12.

Accordingly, the guide plate (22, 32) and the link plates (24, 34) of each link row (20, 30) are relatively rotatable to the connection pin 12. When the connection pin 12 is fitted into the guide plate and the link plates of one link row, sliding movement occurs between the guide plate and the link plates of another link row and the connection pin 12. The guide plate and the link plates of any link row (20, 30) are composed so as to be rotatable in sliding movement with the connection pin 12, and thus the relation between the first link row 20 and the connection pin 12 and the relation between the second link row 30 and the connection pin 12 can be made equal. Accordingly, elongation of only one link row caused by abrasion or the like does not occur. Even if elongation occurs, the first link row 20 and the second link row 30 have the same elongation.

Further, the guide plate (22, 32) and the link plates (24, 34) of each link row (20, 30) freely rotate and slide to the connection pin 12 of a cylindrical shape, abrasion of the connection pin 12 disperses to all periphery of the pin without occurring in a particular region. Accordingly, the silent chain 10 of this embodiment has improved elongation endurance.

Then, the guide plate (22, 32) and the link plates (24, 34) of any link row (20, 30) are composed so as to be rotatable in sliding movement with the connection pin 12, it is necessary that the connection pin 12 is bound to a predetermined region. In this embodiment, fastening means such as fitting, snap-fit and riveting fastens the pin stoppers 14 of a ring shape at both ends of the connection pin 12 outside the guide plates (22, 32).

As described, in the silent chain according to the present invention, the number and shape of the guide plate and the link plate are the same for each link row, and the guide plates and the link plates of each link row are composed relatively rotatable to the connection pin. The strength and the elongation of each link row are uniformized when the link row is composed in this manner.

Conventionally, although there has existed a problem that a link row that does not include the guide plate is easily fractured, endurance improves to fracture when a link row without a difference of strength and elongation is adopted, and a life lengthens on this viewpoint.

Since the strength of the link row is uniformized and the link row thus does not have a difference of strength and elongation, the pitch and its change of each link row are also uniformized. In the state before the proof load is applied immediately after manufacturing the silent chain, the pitch is usually finished in the same dimension. Even if the proof load is applied to this state and even if a tensile load is further applied at a using time, the plastic deformation due to the proof load and the elastic deformation due to the tensile load in a using time are the same with each link row since the configuration of the link rows is substantially the same. Uniformizing the pitch and its change in each link row makes engagement conditions with the sprocket equal with each link row, the life lengthens on this viewpoint as well.

In the present invention, only one kind of link plate is required to form the silent chain in which the strength and the elongation are uniformized. Accordingly, the number of parts, the number of part control processes and the number of assembly processes are reduced to manufacture the silent chain economically.

Further, since two or more kinds of link plates are not used where a thickness difference cannot be recognized by eye-sight, risk of defective occurrence due to mixing parts is also minimized.

## Claims

1. A silent chain (10), comprising:
a plurality of first link rows (20), each of the first link rows (20) consisting essentially of one guide plate (22) and a number N of link plates (24);
a plurality of second link rows (30), each of the second link rows (30) consisting essentially of one guide plate(32) and the same number N of link plates (34);
and
a plurality of connection pins (12);
wherein the guide plates (22, 32) of the first link rows (20) and the second link rows (30) are of the same shape and size, the link plates (24, 34) of the first link rows (20) and the second link rows (30) are of the same shape and size,
wherein said first link rows (20) and said second link rows (30) are connected in alternating, interleaving relationship along a longitudinal direction of the chain (10) by said connection pins (12), whereby the guide plates (22, 32) of successive interleaving link rows (20, 30) are in staggered relationship along said longitudinal direction of the chain (10), each said connection pin (12) extending through the link plates (24, 34) and guide plates (22, 32) of two successive interleaving link rows (20, 30),
wherein the link plates (24, 34) and guide plates (22, 32) through which each said connection pin (12) extends consist of the link plates (24, 34) and one guide plate (22, 32) of each of two successive interleaving link rows (20, 30), and
wherein the guide plates (22, 32) and the link plates(24, 34) of said each pair of successive interleaving first and second link rows (20, 30) are relatively rotatable on the connection pin (12) extending through them.

## Patentansprüche

1. Geräuscharme Kette (10) mit
einer Vielzahl von ersten Kettengliedreihen (20), wobei jede der ersten Kettengliedreihen (20) im Wesentlichen aus einer Führungslasche (22) und einer Anzahl N von Kettenlaschen (24) besteht,
einer Vielzahl von zweiten Kettengliedreihen (30), wobei jede der zweiten Kettengliedreihen (30) im Wesentlichen aus einer Führungslasche (32) und derselben Anzahl N von Kettenlaschen (34) besteht, und
einer Vielzahl von Verbindungsstiften (12),
wobei die Führungslaschen (22, 32) der ersten Kettengliedreihen (20) und der zweiten Kettengliedreihen (30) dieselbe Form und Größe aufweisen und die Kettenlaschen (24, 34) der ersten Kettengliedreihen (20) und der zweiten Kettengliedreihen (30) dieselbe Form und Größe aufweisen,
wobei die ersten Kettengliedreihen (20) und die zweiten Kettengliedreihen (30) in einer altemierenden, überlappenden Beziehung entlang einer Längsrichtung der Kette (10) mittels der Verbindungsstifte (12) verbunden sind, wodurch die Führungslaschen (22, 32) aufeinander folgender überlappender Kettengliedreihen (20, 30) in einer Zickzack-Beziehung entlang der Längsrichtung der Kette (10) angeordnet sind,
wobei sich jeder Verbindungsstift (12) durch die Kettenlaschen (24, 34) und Führungslaschen (22, 32) zweier aufeinander folgender überlappender Kettengliedreihen (20, 30) erstreckt,
wobei die Kettenlaschen (24, 34) und Führungslaschen (22, 32), durch welche sich jeder Verbindungsstift (12) erstreckt, aus den Kettenlaschen (24, 34) und einer Führungslasche (22, 32) von jeder von zwei aufeinander folgenden überlappenden Kettengliedreihen (20, 30) bestehen und
wobei die Führungslaschen (22, 32) und die Kettenlaschen (24, 34) jedes Paars von aufeinander folgenden überlappenden ersten und zweiten Kettengliedreihen (20, 30) auf dem Verbindungsstift (12), der sich durch sie erstreckt, relativ zueinander drehbar sind.

## Revendications

1. Une chaîne silencieuse (10), comprenant :
une pluralité de premières lignes de chaînons (20), chacune des premières lignes de chaînons (20) étant constituée essentiellement d'une plaque de guidage (22) et d'un nombre N de maillons (24) ;
une pluralité de secondes lignes de chaînons (30), chacune des secondes lignes de chaînons (30) étant constituée essentiellement d'une plaque de guidage (32) et du même nombre N de maillons (34) ;
et
une pluralité de broches de liaison (12) ;
dans laquelle les plaques de guidage (22, 32) des premières lignes de chaînons (20) et des secondes lignes de chaînons (30) sont des mêmes forme et dimension, les maillons (24, 34) des premières lignes de chaînons (20) et des secondes lignes de chaînons (30) sont des mêmes forme et dimension,
dans laquelle lesdites premières lignes de chaînons (20) et lesdites secondes lignes de chaînon (30) sont connectées selon une relation alternée entrelacée le long d'une direction longitudinale de la chaîne (10) par lesdites broches de liaison (12), de telle sorte que les plaques de guidage (22,32) de lignes de chaînons (20, 30) successives entrelacées sont en relation en quinconce le long de ladite direction longitudinale de la chaîne (10), chacune desdites broches de liaison (12) s'étendant à travers les chaînons (24, 34) et les plaques de guidage (22, 32) de deux lignes de chaînons (20, 30) entrelacées successives,
dans laquelle les maillons (24, 34) et les plaques de guidage (22, 32) à travers lesquels s'étend chacune desdites broches de liaison (12) sont constitués des maillons (24, 34) et d'une plaque de guidage (22, 32) de chacune desdites paires de premières et secondes lignes de chaînons (20, 30) successives entrelacées, et
dans laquelle les plaques de guidage (22, 32) et les maillons (24, 34) de chacune desdites paires de premières et secondes lignes de chaînons (20, 30) successives entrelacées sont pivotantes relativement sur la broche de liaison (12) s'étendant entre elles.
